(19) Europäisches Patentamt / European Patent Office / Office européen des brevets

(11) **EP 4 741 775 A1**

(12) **EUROPÄISCHE PATENTANMELDUNG**

(43) Veröffentlichungstag:
**13.05.2026 Patentblatt 2026/20**

(21) Anmeldenummer: **25212746.9**

(22) Anmeldetag: **31.10.2025**

(51) Internationale Patentklassifikation (IPC):
**G01F 1/66** *(2022.01)* **G01F 1/667** *(2022.01)*
**G01F 25/10** *(2022.01)*

(52) Gemeinsame Patentklassifikation (CPC):
**G01F 1/66; G01F 1/662; G01F 1/667; G01F 1/668;**
G01F 25/10

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **06.11.2024 DE 102024132307**

(71) Anmelder: **Krohne AG**
**4019 Basel (CH)**

(72) Erfinder:
- **Schipper, Willemijn**
  **3353VA Papendrecht (NL)**
- **van Dijk, Eugene**
  **3207DE Spijkenisse (NL)**

(74) Vertreter: **Gesthuysen Patentanwälte**
**Partnerschaftsgesellschaft mbB**
**Huyssenallee 68**
**45128 Essen (DE)**

(54) **VERFAHREN ZUM BETREIBEN EINES ULTRASCHALLDURCHFLUSSMESSGERÄTS UND ENTSPRECHENDES ULTRASCHALLDURCHFLUSSMESSGERÄT**

(57) Dargestellt und beschrieben ist ein Verfahren (1) zum Betreiben eines Ultraschalldurchflussmessgeräts (2) zur Messung des Durchflusses durch ein von einem Medium (3) durchströmtes Messrohr (4), wobei das Ultraschalldurchflussmessgerät (2) wenigstens einen sendenden Ultraschallwandler (5) zum Senden von Ultraschallsignalen (6) und wenigstens einen empfangenden Ultraschallwandler (7) zum Empfangen von Ultraschallsignalen (6) und eine Steuer- und Auswerteeinheit (8) umfasst, wobei die Ultraschallwandler (5, 7) so angeordnet sind, dass sie in dem Medium (3) einen Ultraschallmesspfad (9) realisieren und wobei die Steuer- und Auswerteeinheit (8) den sendenden Ultraschallwandler (5) so ansteuert, dass dieser das Ultraschallsignal (6) emittiert, der empfangende Ultraschallwandler (7) das emittierte Ultraschallsignal (6) empfängt und die Steuer- und Auswerteeinheit (8) im Messbetrieb (14) durch Auswertung emittierter und empfangener Ultraschallsignale (6) aus einer ermittelten Signallaufzeit (t_sig) des Ultraschallsignals (6) zumindest einen mittelbaren Wert für den Durchfluss (Vp) des Mediums (3) durch das Messrohr (4) ermittelt.

Das Verfahren kann flexibel auf geänderte Messbedingungen reagieren, indem die Steuer- und Auswerteeinheit (8) den sendenden Ultraschallwandler (5) so ansteuert, dass ein breitbandiges Ultraschallsignal (USb,tx) emittiert wird, indem in einem Auswerteschritt (10) ein optimaler Messfrequenzbereich (M_opt) ermittelt wird, indem das empfangene breitbandige Ultraschallsignal (USb,rx) frequenzgefiltert (11) wird in mehrere Messfrequenzbereiche (M) des empfangenen breitbandigen Ultraschallsignals (USb,rx), indem ferner für mehrere der Messfrequenzbereiche (M) jeweils wenigstens ein Qualitätswert (Q) aus dem frequenzgefilterten Ultraschallsignal (USb,rx,f) des zugehörigen Messfrequenzbereichs (M) berechnet (12) wird und derjenige Messfrequenzbereich (M) als optimaler Messfrequenzbereich (M_opt) bestimmt wird, der den höchsten Qualitätswert (Q) erzielt, und indem bei der Ermittlung des zumindest mittelbaren Wertes für den Durchfluss (Vp) eine Signallaufzeit (t_sig) verwendet wird, die nach Frequenzfilterung (11) des empfangenen breitbandigen Ultraschallsignals (USb,rx) aus dem optimalen Messfrequenzbereich (M_opt) ermittelt worden ist.

EP 4 741 775 A1

Fig. 2

**Beschreibung**

Die Erfindung betrifft ein Verfahren zum Betreiben eines Ultraschalldurchflussmessgeräts zur Messung des Durchflusses durch ein von einem Medium durchströmtes Messrohr, wobei das Ultraschalldurchflussmessgerät wenigstens einen sendenden Ultraschallwandler zum Senden von Ultraschallsignalen und wenigstens einen empfangenden Ultraschallwandler zum Empfangen von Ultraschallsignalen und eine Steuer- und Auswerteeinheit umfasst, wobei die Ultraschallwandler so angeordnet sind, dass sie in dem Medium einen Ultraschallmesspfad realisieren und wobei die Steuer- und Auswerteeinheit den sendenden Ultraschallwandler so ansteuert, dass dieser das Ultraschallsignal emittiert, der empfangende Ultraschallwandler das emittierte Ultraschallsignal empfängt und die Steuer- und Auswerteeinheit im Messbetrieb durch Auswertung emittierter und empfangener Ultraschallsignale aus einer ermittelten Signallaufzeit des Ultraschallsignals zumindest einen mittelbaren Wert für den Durchfluss des Mediums durch das Messrohr ermittelt. Darüber hinaus betrifft die Erfindung auch ein solches Ultraschalldurchflussmessgerät.

Die Durchflussmessung unter Verwendung von Ultraschallwellen ist seit Langem bekannt. Unabhängig davon, welches Messverfahren genau zur Anwendung kommt (zum Beispiel Laufzeitmessung, Laufzeitdifferenzmessung (mit der Strömungsrichtung und entgegen der Strömungsrichtung), Frequenzmessung/Dopplereffekt), beruht die Durchflussmessung doch immer auf der Mitnahme von Ultraschallwellen in dem durch das Messrohr strömenden Medium, dessen Strömungsgeschwindigkeit erfasst werden soll. Aus der Signallaufzeit des Ultraschallsignals lässt sich auf die (mittlere) Strömungsgeschwindigkeit des Mediums entlang des Ultraschallmesspfads schließen und damit mittelbar auch auf den Durchfluss des Mediums durch das Messrohr.

Üblicherweise werden die sendenden Ultraschallwandler sehr schmalbandig angeregt, vorzugsweise mit einer einzigen bestimmten Frequenz. Dies hat Vorteile hinsichtlich des Energieeinsatzes (Eigenwerte von Piezo-Aktoren/-Sensoren im Ultraschallwandler) und bei der Signalauswertung, durch Wahl einer bestimmten Frequenz kann auch gezielt Einfluss genommen werden beispielsweise auf die Form und die Dämpfung des gesendeten Ultraschallsignals. Diese Herangehensweise ist problematisch, wenn sich an den Randbedingungen etwas ändert, unter denen die bestimmte Frequenz ausgewählt worden ist, beispielsweise die Schallgeschwindigkeit des Mediums.

Aufgabe der vorliegenden Erfindung ist es, das eingangs beschriebene Verfahren zum Betreiben eines Ultraschalldurchflussmessgeräts und das eingangs beschriebene Ultraschalldurchflussmessgerät so weiterzubilden, dass robust auf sich ändernde Betriebsbedingungen bei der Messung reagiert werden kann.

Die hergeleitete Aufgabe ist bei dem zuvor beschriebenen Verfahren zunächst dadurch gelöst, dass die Steuer- und Auswerteeinheit den sendenden Ultraschallwandler so ansteuert, dass ein breitbandiges Ultraschallsignal emittiert wird.

In einem Auswerteschritt wird ein optimaler Messfrequenzbereich ermittelt, indem das empfangene breitbandige Ultraschallsignal frequenzgefiltert wird in mehrere Messfrequenzbereiche des empfangenen breitbandigen Ultraschallsignals. In dem Auswerteschritt wird ferner für mehrere der Messfrequenzbereiche jeweils wenigstens ein Qualitätswert aus dem frequenzgefilterten Ultraschallsignal des zugehörigen Messfrequenzbereichs berechnet und derjenige Messfrequenzbereich wird als optimaler Messfrequenzbereich bestimmt, der den höchsten Qualitätswert erzielt.

Dieser Verfahrensschritt macht deutlich, was unter einem breitbandigen Ultraschallsignal zu verstehen ist. Das breitbandige Ultraschallsignal muss jedenfalls über einen gewissen Frequenzbereich - kontinuierlich oder bereichsweise verteilt - Frequenzanteile aufweisen, sodass die beanspruchte Frequenzfilterung in mehrere Messfrequenzbereiche sinnvoll möglich ist, also in den untersuchten Bereichen Frequenzanteile vorliegen können.

Bei der Ermittlung des zumindest mittelbaren Wertes für den Durchfluss wird dann - also im regulären Messbetrieb - eine Signallaufzeit verwendet, die nach Frequenzfilterung des empfangenen breitbandigen Ultraschallsignals aus dem optimalen Messfrequenzbereich ermittelt worden ist.

Es wird also immer mit einem breitbandigen Ultraschallsignal gearbeitet, sowohl im Auswerteschritt, in dem der optimale Messfrequenzbereich ermittelt wird, als auch im normalen Messbetrieb, in dem das breitbandige Ultraschallsignal auf den optimalen Messfrequenzbereich frequenzgefiltert wird und aus dem frequenzgefilterten Ultraschallsignal dann die Signallaufzeit ermittelt wird. Durch das konsequente Arbeiten mit einem breitbandigen Ultraschallsignal enthält das ausgesendete Ultraschallsignal stets eine geeignete Frequenz, die vorteilhaft ist auch bei geänderten Messbedingungen. Auf solche geänderte Messbedingungen wird nicht mit einem geänderten Ultraschallsignal reagiert, das der sendende Ultraschallwandler aussendet, sondern lediglich mit einer angepassten Frequenzfilterung des empfangenen breitbandigen Ultraschallsignals, weil sich der optimale Messfrequenzbereich geändert hat.

Gemäß einer vorteilhaften Ausgestaltung des Verfahrens ist vorgesehen, dass der Auswerteschritt zur Ermittlung eines optimalen Messfrequenzbereichs bei jeder Bestimmung des zumindest mittelbaren Wertes für den Durchfluss des Mediums ausgeführt wird. So kann am schnellsten auf geänderte Messbedingungen reagiert werden, jedoch ist der Aufwand beträchtlich, hardwaremäßig (zum Beispiel mehrere Frequenzfilter), vom Rechenaufwand her und damit auch energetisch, was gerade bei Zweileitergeräten ein Problem sein kann. Bei einer alternativen Ausgestaltung des Verfahrens ist daher vorgesehen, dass der Auswerteschritt zur Ermittlung eines optimalen Messfrequenzbereichs nach einer Mehrzahl von Bestimmungen des zumindest mittelbaren Wertes für den Durchfluss des Mediums ausgeführt wird oder dass der Auswerteschritt zur Ermittlung eines optimalen Messfrequenzbereichs durch ein externes Signal des Ultraschalldurchflussmessgeräts ausgelöst wird. So lassen sich auch große Auswerteintervalle realisieren oder der Auswerteschritt kann bedarfsweise ausgelöst werden, beispielsweise wenn der Verdacht besteht (geänderte Prozessparameter), dass sich die Messsituation geändert hat.

Es gibt verschiedene Möglichkeiten, das breitbandige Ultraschallsignal zu erzeugen. Bei einer Variante wird ein pulsförmiges Signal erzeugt (möglichst nahe einem Dirac-Stoß hinsichtlich des entsprechenden Frequenzspektrums und dessen nachfolgender Auswertung). Bei einer bevorzugten Variante des Verfahrens wird das breitbandige Ultraschallsignal erzeugt durch Anregung des sendenden Ultraschallwandlers mit einer Überlagerung mehrerer periodischer Zeitsignal unterschiedlicher Frequenz, insbesondere wobei die periodischen Zeitsignale harmonische Signale sind. Diese Methode ist vorteilhaft, weil insbesondere harmonische periodische Zeitsignale sehr einfach erzeugt werden können und durch die Wahl dieser periodischen Zeitsignale auch die Messfrequenzbereiche und die Signalamplituden in den Messfrequenzbereichen definiert werden können.

Bei einer alternativen Weiterbildung des Verfahrens wird das breitbandige Ultraschallsignal erzeugt durch Anregung des sendenden Ultraschallwandlers mit einem Rechtecksignal oder mit einer periodischen Rechtecksignalfolge, insbesondere wobei die Grundfrequenz der periodischen Rechtecksignalfolge einer Grundmode einer Schwingung des sendenden Ultraschallwandlers entspricht. Diese Art der Anregung ist ebenfalls einfach realisierbar und es werden automatisch Frequenzanteile bei den ungeradzahlig Vielfachen der Frequenz des periodischen Rechtecksignals erzeugt.

Bei einer weiteren bevorzugten Ausgestaltung des Verfahrens wird das empfangene breitbandige Ultraschallsignal frequenzgefiltert in mehrere Messfrequenzbereiche des empfangenen breitbandigen Ultraschallsignals durch Einsatz wenigstens eines analogen oder eines digitalen Bandpassfilters. Wenn nur ein Bandpassfilter verwendet wird, muss dieses hinsichtlich seiner Mittenfrequenz konfigurierbar sei, damit die mehreren Messfrequenzbereiche im Auswerteschritt zeitlich nacheinander mit aufeinanderfolgenden breitbandigen Ultraschallsignalen untersucht werden können. Wenn die Signalverarbeitung digital, also als Abtastsystem realisiert ist, wie es sich bei Einsatz beispielsweise von modernen digitalen Signalprozessoren anbietet, dann ist die Realisierung des Bandpassfilters als Finite Impulse Response (FIR) oder als Infinite Impulse Response (IIR) Filter vorteilhaft.

Im Rahmen der Erfindung haben sich verschiedene Arten von Qualitätswerten bzw. Arten der Ermittlung eines Qualitätswertes für einen Messfrequenzbereich aus dem jeweiligen frequenzgefilterten Ultraschallsignal des zugehörigen Messfrequenzbereichs als aussagekräftig und daher als geeignet herausgestellt.

Eine bevorzugte Weiterbildung des Verfahrens zeichnet sich dadurch aus, dass der Qualitätswert für einen Messfrequenzbereich ermittelt wird, indem eine Signallaufzeit des frequenzgefilterten Ultraschallsignals ermittelt wird und eine Laufzeitabweichung von einer Vergleichslaufzeit ermittelt wird, wobei eine kleinere Laufzeitabweichung einem höheren Qualitätswert entspricht. Je nach Anwendungsfall kann die Vergleichslaufzeit auf unterschiedliche Weise gewonnen werden. Beispielsweise kann die Vergleichslaufzeit eine Signallaufzeit aus einem vorbestimmten Messfrequenzbereich sein oder die Vergleichslaufzeit wird als der Mittelwert von Signallaufzeiten aus vorbestimmten Messfrequenzbereichen bestimmt, beispielsweise aus höherfrequenten Messfrequenzbereichen, weil hier kleinere Signallaufzeitunterschiede erwartet werden. Es kann aber auch vorteilhaft sein, als Vergleichslaufzeit den Mittelwert von Signallaufzeiten aus allen Messfrequenzbereichen zu berechnen.

Bei einer anderen Weiterentwicklung des Verfahrens wird der Qualitätswert für einen Frequenzbereich des empfangenen breitbandigen Ultraschallsignals durch Berechnung einer Signalabweichung im betrachteten Zeitintervall ermittelt, und zwar zwischen dem empfangenen, frequenzgefilterten breitbandigen Ultraschallsignal und einem entsprechenden Referenzsignal, wobei eine kleinere Signalabweichung einem höheren Qualitätswert entspricht. Dieses Kriterium stellt also auf die Ähnlichkeit der Signalform ab. Es hat sich als vorteilhaft herausgestellt, wenn im betrachteten Zeitintervall prägnante Punkte der Signalverläufe für den Vergleich herangezogen werden, also beispielsweise Maximalausschläge bei harmonischen Signalen, mit anderen Worten, die Punkte der Signalverläufe, die eine Hüllkurve aufspannen würden. In diesem Zusammenhang bietet es sich an, die Signalabweichung durch Vergleich korrespondierender Schwingungsamplituden zu berechnen.

Bei einer weiteren vorteilhaften Ausgestaltung des Verfahrens wird der Qualitätswert für einen Frequenzbereich des empfangenen breitbandigen Ultraschallsignals durch Berechnung wenigstens einer Frequenzabweichung im betrachteten Zeitintervall ermittelt, und zwar zwischen dem empfangenen, frequenzgefilterten breitbandigen Ultraschallsignal und einem entsprechenden Referenzsignal, wobei eine kleinere Frequenzabweichung einem höheren Qualitätswert entspricht. Dazu ist es erforderlich, in dem betrachteten Zeitintervall eine Frequenzanalyse des Frequenzgefilterten Ultraschallsignals vorzunehmen. Bei einer bevorzugten Ausgestaltung des Verfahrens hat es sich bewährt, die momentanen Signalfrequenzen der miteinander verglichenen Signale im Zeitbereich zu berechnen durch Anwendung der Hilbert-Transformation auf die Signale, insbesondere wobei der Qualitätswert der Mittelwert mehrerer der berechneten Frequenzabweichungen im betrachteten Zeitintervall ist.

Eine weitere Ausbildung des Verfahrens ist dadurch gekennzeichnet, dass der Qualitätswert für einen Frequenzbereich des empfangenen breitbandigen Ultraschallsignals durch Berechnung wenigstens eines Signal-/Rausch-Verhältnisses des empfangenen breitbandigen Ultraschallsignals im betrachteten Zeitintervall ermittelt wird, wobei ein größeres Signal-/Rauschverhältnis einem höheren Qualitätswert entspricht. Bei einer vorteilhaften Umsetzung des Verfahrens wird das Signal-/Rausch-Verhältnis berechnet aus dem Spitze-Spitze-Wert des reinen Rauschsignals und dem Spitze-Spitze-Wert des verrauschten Nutzsignals in dem betrachteten Zeitintervall.

Die Aufgabe wird ebenfalls gelöst durch das zuvor beschriebene Ultraschalldurchflussmessgerät, dessen Steuer- und Auswerteeinheit so ausgebildet ist, dass das Ultraschalldurchflussmessgerät im Betrieb in der Lage ist, das zuvor geschilderte Verfahren durchzuführen.

Im Einzelnen gibt es nun eine Vielzahl von Möglichkeiten, das erfindungsgemäße Verfahren zum Betreiben eines Ultraschalldurchflussmessgeräts und das korrespondierende Ultraschalldurchflussmessgerät auszugestalten und weiterzubilden. Dazu wird verwiesen, einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigt

Fig. 1    schematisch ein Verfahren zum Betreiben eines Ultraschalldurchflussmessgeräts und ein Ultraschalldurchflussmessgerät, das dieses Verfahren durchführt,

Fig. 2    schematisch ein Verfahren zum Betreiben eines Ultraschalldurchflussmessgeräts, bei dem aus einem breitbandigen Ultraschallsignal ein Qualitätswert und daraus ein optimaler Messfrequenzbereich bestimmt wird,

Fig. 3    schematisch ein Verfahren zum Betreiben eines Ultraschalldurchflussmessgeräts, bei dem ein Qualitätswert basierend auf einer Signallaufzeit des frequenzgefilterten Ultraschallsignals bestimmt wird,

Fig. 4    schematisch ein Verfahren zum Betreiben eines Ultraschalldurchflussmessgeräts, bei dem ein Qualitätswert basierend auf einer Signalabweichung im betrachteten Zeitintervall ermittelt wird zwischen dem empfangenen, frequenzgefilterten breitbandigen Ultraschallsignal und einem entsprechenden Referenzsignal,

Fig. 5    schematisch ein Verfahren zum Betreiben eines Ultraschalldurchflussmessgeräts, bei dem ein Qualitätswert durch Berechnung einer Frequenzabweichung im betrachteten Zeitintervall ermittelt wird zwischen dem empfangenen, frequenzgefilterten breitbandigen Ultraschallsignal und einem entsprechenden Referenzsignal und

Fig. 6    schematisch ein Verfahren zum Betreiben eines Ultraschalldurchflussmessgeräts, bei dem ein Qualitätswert durch Berechnung wenigstens eines Signal-/Rausch-Verhältnisses des empfangenen breitbandigen Ultraschallsignals im betrachteten Zeitintervall ermittelt wird.

In den Figuren sind schematisch verschiedene Aspekte von Verfahren 1 zum Betreiben eines Ultraschalldurchflussmessgeräts 2 sowie von das Verfahren 1 betreibenden Ultraschalldurchflussmessgeräten 2 dargestellt.

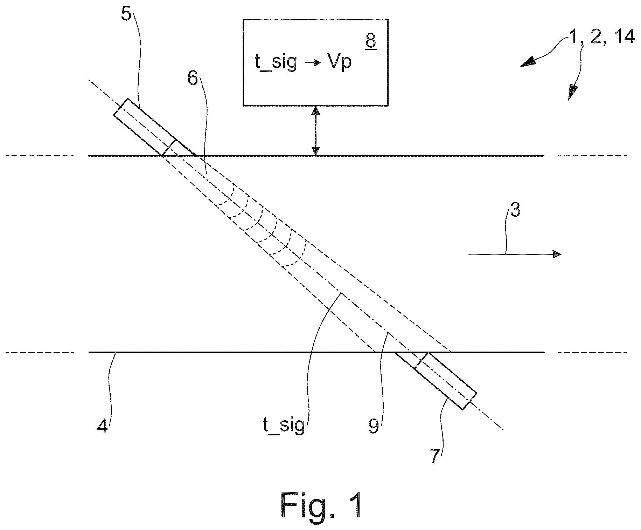

Fig. 1 zeigt ein Verfahren 1, das den Messbetrieb 14 eines Ultraschalldurchflussmessgeräts 2 betrifft, bei dem ein Durchfluss Vp eines Mediums 3 bestimmt wird, das durch ein Messrohr 4 des Ultraschalldurchflussmessgeräts 2 strömt. Das Ultraschalldurchflussmessgerät 2 weist einen sendenden Ultraschallwandler 5 zum Senden von Ultraschallsignalen 6 und einen empfangenden Ultraschallwandler 7 zum Empfangen von Ultraschallsignalen 6 auf, sowie eine Steuer- und Auswerteeinheit 8. Die Ultraschallwandler 5, 7 sind so angeordnet, dass sie in dem Medium 3 einen Ultraschallmesspfad 9 realisieren. Die Steuer- und Auswerteeinheit 8 steuert den sendenden Ultraschallwandler 5 so an, dass dieser das Ultraschallsignal 6 emittiert, der empfangende Ultraschallwandler 7 empfängt das emittierte Ultraschallsignal 6 und die Steuer- und Auswerteeinheit 8 ermittelt in dem hier dargestellten Messbetrieb 14 durch Auswertung emittierter und empfangener Ultraschallsignale 6 aus einer ermittelten Signallaufzeit t_sig des Ultraschallsignals 6 den Wert für den Durchfluss Vp des Mediums 3 durch das Messrohr 4.

Es ist bekannt, das Ultraschallsignal 6 sehr schmalbandig oder auch nur monofrequent anzuregen aus den im allgemeinen Beschreibungsteil genannten Gründen. Die Anregungsfrequenz wird dann beispielsweise in Abhängigkeit von Eigenschaften des Mediums, der Schallgeschwindigkeit in dem Medium, der frequenzabhängigen Dämpfung von Ultraschallsignalen im Medium usw. ausgewählt und fest eingestellt. Diese Vorgehensweise ist unflexibel hinsichtlich einer deutlichen Änderung der Messbedingungen, beispielsweise aufgrund einer Änderung des Mediums und einer damit einhergehenden Änderung der Schallgeschwindigkeit in dem Medium, was auf die Messung, insbesondere die Qualität der Messung, erheblichen Einfluss haben kann.

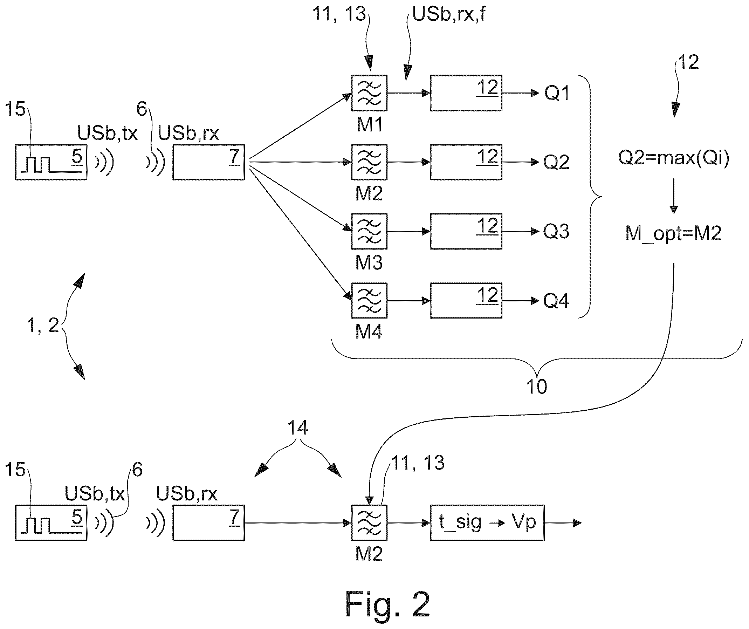

In den Figuren 2 bis 6 sind Verfahren 1 zum Betrieb eines Ultraschalldurchflussmessgeräts 2 und entsprechende Ultraschalldurchflussmessgeräte 2 gezeigt, die es ermöglichen, auf geänderte Messbedingungen flexibel und robust zu reagieren, und so die Qualität der Messung aufrecht zu erhalten.

Den gezeigten Verfahren 1 und Ultraschalldurchflussmessgeräten 2 ist gemeinsam, dass die Steuer- und Auswerteeinheit 8 den sendenden Ultraschallwandler 5 so ansteuert, dass ein breitbandiges Ultraschallsignal USb,tx emittiert wird (Fig. 2).

In einem Auswerteschritt 10 wird ein optimaler Messfrequenzbereich M_opt ermittelt, indem das empfangene breitbandige Ultraschallsignal USb,rx frequenzgefiltert 11 wird in mehrere Messfrequenzbereiche M1-M4 des empfangenen breitbandigen Ultraschallsignals USb,rx. Für mehrere der Messfrequenzbereiche - im dargestellten Fall für alle Messfrequenzbereiche M1-M4 - wird jeweils ein Qualitätswert Q1-Q4 aus dem frequenzgefilterten Ultraschallsignal USb,rx,f des zugehörigen Messfrequenzbereichs M1-M4 berechnet 12. Selbstverständlich können auch mehrere Qualitätswerte aus dem frequenzgefilterten Ultraschallsignal USb,rx,f des zugehörigen Messfrequenzbereichs M1-M4 berechnet 12 werden. Es wird derjenige Messfrequenzbereich M als optimaler Messfrequenzbereich M_opt bestimmt, der den höchsten Qualitätswert Q erzielt, im dargestellten Ausführungsbeispiel ist dies der Qualitätswert Q2 = max(Qi), sodass der korrespondierende Messfrequenzbereich M2 der optimale Messfrequenzbereich M_opt ist.

Bei der Ermittlung des Wertes für den Durchfluss Vp wird dann im Messbetrieb 14 (unterer Abschnitt in Fig. 2) eine Signallaufzeit t_sig verwendet, die nach Frequenzfilterung 11 des empfangenen breitbandigen Ultraschallsignals USb,rx aus dem optimalen Messfrequenzbereich M_opt = M2 ermittelt worden ist. Es wird also durchgehend mit einem breitbandigen gesendeten Ultraschallsignal USb,tx gearbeitet, sodass auch stets ein breitbandiges Ultraschallsignal USb,rx empfangen wird. Dies gilt für den Auswerteschritt 10 genauso wie für den Messbetrieb 14. Wenn der optimale Messfrequenzbereich M_opt gefunden worden ist, muss im Messbetrieb 14 natürlich nur noch diese eine Frequenzfilterung 11 durchgeführt werden.

Bei dem in Fig. 2 dargestellten Verfahren 1 und Ultraschalldurchflussmessgerät 2 werden nach Durchführung des Auswerteschritts 10 zur Ermittlung des optimalen Messfrequenzbereichs M_opt eine Mehrzahl an Durchflussmessungen im Messbetrieb 14 vorgenommen. Bei anderen Varianten des Verfahrens 1, die hier nicht dargestellt sind, erfolgt der Auswerteschritt 10 bei jeder Durchflussmessung im Messbetrieb 14, was relativ aufwendig ist und hohe Anforderungen an die Signalverarbeitung stellt.

Die Signalverarbeitung in Fig. 2 erfolgt digital, das empfangene breitbandige Ultraschallsignal USb,rx wird hochfrequent abgetastet und die Vielzahl an Abtastwerten wird dann mittels digitaler Bandpassfilter 13 in die Messfrequenzbereiche M1-M4 frequenzgefiltert 11. Für jeden Messfrequenzbereich M1-M4 ist ein separates Bandpassfilter 13 realisiert, sodass die Frequenzfilterungen 11 gleichzeitig erfolgen können. Die Bandpassfilter 13 sind als Finite Impulse Response (FIR) Filter umgesetzt. Die Implementierung des Verfahrens ist aufgrund der parallelen Ausführung der Bandpassfilter 13 schnell, jedoch auch gerätetechnisch aufwendig.

Bei einer anderen, hier nicht gezeigten Realisierung wird nur mit einem einzigen Bandpass 13 gearbeitet, dessen Mittenfrequenz in den abzudeckenden Messfrequenzbereichen (M1-M4) einstellbar ist. Die Frequenzfilterung 11 in die verschiedenen Messfrequenzbereiche M1-M4 muss dann sequenziell erfolgen, genau wie die zugehörige Berechnung der Qualitätswerte Q1-Q4. Entweder werden dafür sequenziell hintereinander empfangene Ultraschallsignale USb,rx verwendet, oder ein abgetastetes breitbandiges und empfangenes Ultraschallsignal USb,rx wird gespeichert und mehrfach hintereinander verarbeitet. Diese Implementierung ist zeitaufwendiger, aber gerätetechnisch deutlich einfacher, zumal im Messbetrieb 14 auch nur ein einziges Bandpassfilter 13 für die Frequenzfilterung 11 benötigt wird, nämlich für die Frequenzfilterung 11 in den optimalen Messfrequenzbereich M_opt.

Bei dem Verfahren 1 gemäß Fig. 2, wird das breitbandige Ultraschallsignal USb,tx erzeugt durch Anregung des sendenden Ultraschallwandlers 5 mit einer periodischen Rechtecksignalfolge 15, wobei die Grundfrequenz der periodischen Rechtecksignalfolge 15 einer Grundmode einer Schwingung des sendenden Ultraschallwandlers 5 entspricht. Das so erzeugte Ultraschallsignal 6 enthält Frequenzanteile mit ungeradzahlig vielfachen Frequenzen der Grundfrequenz der periodischen Rechtecksignalfolge 15 und ist insoweit klar breitbandig.

Bei hier nicht dargestellten Ausgestaltungen des Verfahrens 1 wird das breitbandige Ultraschallsignal USb,tx erzeugt durch Anregung des sendenden Ultraschallwandlers 5 mit einer Überlagerung mehrerer periodischer Zeitsignale unterschiedlicher Frequenz, vorzugsweise mit harmonischen Signalen. Die Methode ist einfach umsetzbar und es sind Signale mit definierten Frequenzen mit unabhängig voneinander bestimmbaren Amplituden erzeugbar.

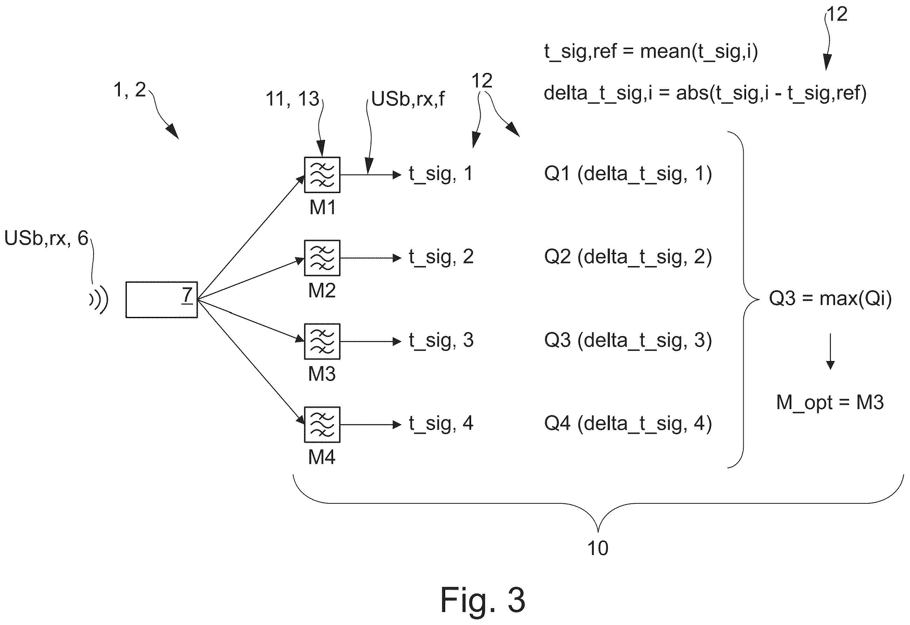

Fig. 3 zeigt ein Verfahren 1 und ein Ultraschalldurchflussmessgerät 2, bei dem der Qualitätswert Q für einen Messfrequenzbereich M ermittelt wird, indem eine Signallaufzeit t_sig,i (für i = 1...4) des frequenzgefilterten Ultraschallsignals USb,rx,f ermittelt wird und eine Laufzeitabweichung delta_t_sig,i von einer Vergleichslaufzeit t_sig,ref ermittelt wird, wobei eine kleinere Laufzeitabweichung delta_t_sig,i einem höheren Qualitätswert Qi entspricht. Im vorliegenden Fall wird die Vergleichslaufzeit t_sig,ref als der Mittelwert mean(t_sig,i) von Signallaufzeiten t_sig,i aus allen Messfrequenzbereichen M1-M4 berechnet. Im dargestellten Fall ist der Qualitätswert Q3 des Messfrequenzbereiches M3 am größten von allen Qualitätswerten Q, sodass M3 der optimale Messfrequenzbereich M_opt ist.

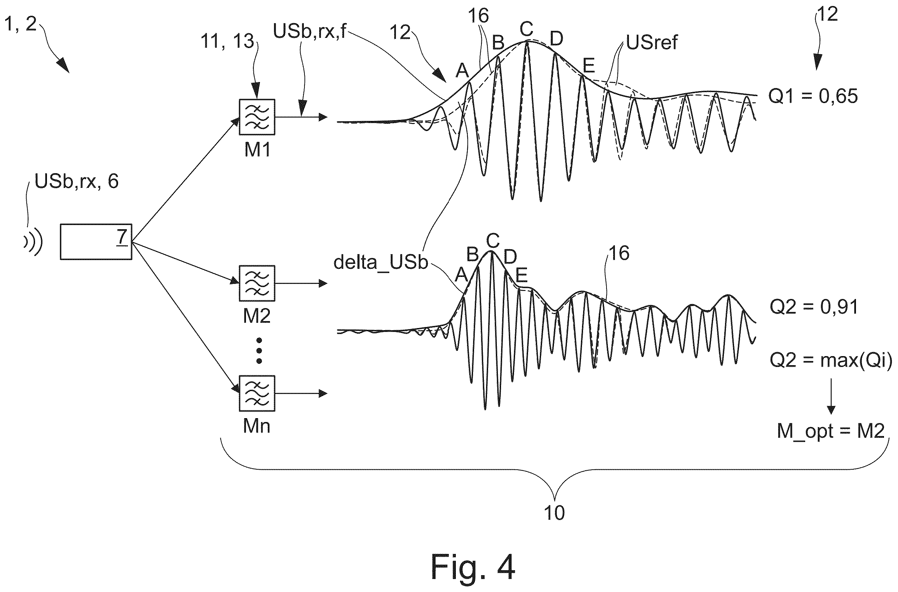

Fig. 4 zeigt ein Verfahren 1, bei dem der Qualitätswert Q für einen Messfrequenzbereich M des empfangenen breitbandigen Ultraschallsignals USb,rx durch Berechnung einer Signalabweichung delta_USb im betrachteten Zeitintervall ermittelt wird, nämlich zwischen dem empfangenen, frequenzgefilterten breitbandigen Ultraschallsignal USb,rx,f (durchgezogene Linie) und einem entsprechenden Referenzsignal USref (gestrichelte Linie), wobei eine kleinere Signalabweichung delta_USb einem höheren Qualitätswert Q entspricht. Die Verläufe des Referenzsignals USref sind hier beim Kalibrieren des Ultraschalldurchflussmessgeräts 2 im Werk aufgenommen worden unter kontrollierten Referenzbedingungen.

Für die beiden Messfrequenzbereiche M1 und M2 sind entsprechende Kurven dargestellt, und zwar zum einen die frequenzgefilterten 11 Kurvenverläufe mit mehreren Schwingungen im betrachteten Zeitbereich und zum anderen die entsprechenden Hüllkurven 16 der höherfrequenten, zuerst genannten Kurvenverläufe.

Die Qualitätswerte Q1 und Q2 sind berechnet worden mittels einer Signalabweichung delta_USb durch Vergleich korrespondierender Schwingungsamplituden A, B, C, D und E des empfangenen, frequenzgefilterten breitbandigen Ultraschallsignal USb,rx,f (durchgezogene Linie) und des entsprechenden Referenzsignals USref (gestrichelte Linie). Der Qualitätswert Q wird im dargestellten Fall für jeden Messfrequenzbereich (M1, M2) nach folgender Gleichung berechnet:

$$Q = 1 - \sum_{i=1}^{n} abs\left( \frac{ampl,i(USb,rx,f)}{\max(USb,rx,f)} - \frac{ampl,i(USref)}{\max(USref)} \right)$$

Es werden n Amplituden betrachtet (A, B, C, D, E) und die jeweiligen Verläufe des empfangenen, frequenzgefilterten breitbandigen Ultraschallsignals USb,rx,f und des entsprechenden Referenzsignals USref werden auf ihre maximalen Ausschläge normiert. Je größer die Abweichungen sind, desto kleiner ist der errechnete Qualitätswert Q im jeweiligen Messfrequenzbereich M.

Die mit A, B, C, D, E gekennzeichneten Amplitudenwerte sind im Messfrequenzbereich M1 für das empfangene, frequenzgefilterte breitbandige Ultraschallsignal USb,rx,f 0.508, 0.840, 1.00, 0.865 und 0.587 und für das entsprechende Referenzsignal USref 0.308, 0.725, 1.00, 0.864 und 0.561. Daraus ergibt sich der Qualitätswert Q1 zu 0.65.

Die mit A, B, C, D, E gekennzeichneten Amplitudenwerte sind im Messfrequenzbereich M2 für das empfangene, frequenzgefilterte breitbandige Ultraschallsignal USb,rx,f 0.430, 0.843, 1.00, 0.766 und 0.554 und für das entsprechende Referenzsignal USref 0.397, 0.828, 1.00, 0.756 und 0.526. Daraus ergibt sich der Qualitätswert Q2 zu 0.91.

Es sind eine Vielzahl von mathematischen Bewertungsmaßen denkbar, die die Ähnlichkeit der Signalformen quantitativ erfassen. Ein Beispiel für ein weiteres Maß ist die Abweichung der in Fig. 4 eingezeichneten Hüllkurven zwischen dem empfangenen Ultraschallsignal USb,rx,f und dem Referenzsignal USref (Differenzfläche). Andere Klassen von Maßen können Korrelationen oder statistische Abstandsmaße sein.

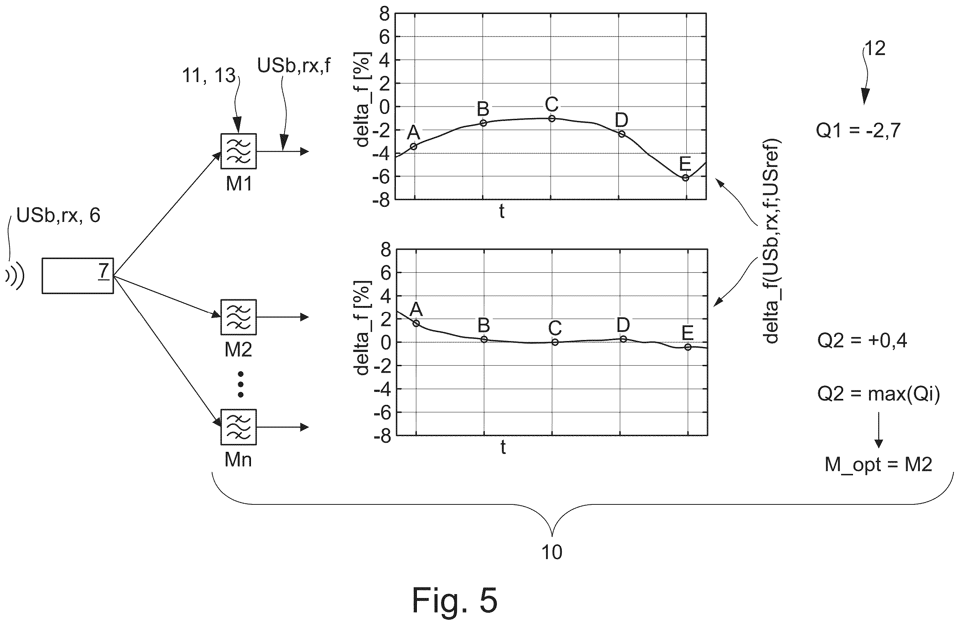

Das in Fig. 5 dargestellte Verfahren 1 und Ultraschalldurchflussmessgerät 2 zeichnen sich dadurch aus, dass der Qualitätswert Q für einen Messfrequenzbereich M des empfangenen breitbandigen und frequenzgefilterten 11 Ultraschallsignals USb,rx,f durch Berechnung einer Frequenzabweichung delta_f im betrachteten Zeitintervall ermittelt wird zwischen dem empfangenen, frequenzgefilterten breitbandigen Ultraschallsignal USb,rx,f und einem entsprechenden Referenzsignal USref, wobei eine betragsmäßig kleinere Frequenzabweichung delta_f einem höheren Qualitätswert Q entspricht. Das Referenzsignal USref ist, wie schon zu Fig. 4 beschrieben, unter Referenzbedingungen bei der Werkskalibrierung des Ultraschalldurchflussmessgeräts 2 aufgenommen worden. Fig. 5 zeigt nicht die verschiedenen Frequenzen für das empfangene, frequenzgefilterte breitbandige Ultraschallsignal USb,rx,f und das entsprechende Referenzsignal USref, sondern gezeigt sind die Frequenzabweichungen delta_f, die zu verschiedenen Zeitpunkten k = A, B, C, D, E der Signalverläufe berechnet worden sind gemäß nachstehender Gleichung:

$$delta\_f,k = (freq,k(USref) - freq,k(USb,rx,f))/freq,k(USref)$$

Der Qualitätswert Qi im Messfrequenzbereich Mi ist als Mittelwert der errechneten Momentanfrequenzabweichungen delta_f,k berechnet worden, wobei k alle Frequenzabweichungen durchläuft:

$$Qi = mean(delta\_f,k(Mi)).$$

Für die dargestellten Frequenzabweichungen delta_f in den Messfrequenzbereichen M1 und M2 ergibt sich für den Messfrequenzbereich M1 ein Qualitätswert von Q1 = -2,7, und für die dargestellten Frequenzabweichungen delta_f ergibt sich für den Messfrequenzbereich M2 ein Qualitätswert von Q2 = +0,4. Deshalb ist in diesem Beispiel der Messfrequenzbereich M2 der optimale Messfrequenzbereich M_opt. Die momentanen Signalfrequenzen der miteinander verglichenen Signale im Zeitbereich zu den Zeitpunkten A, B, C, D, E werden berechnet durch Anwendung der Hilbert-Transformation auf die Signale USb,rx,f und USref.

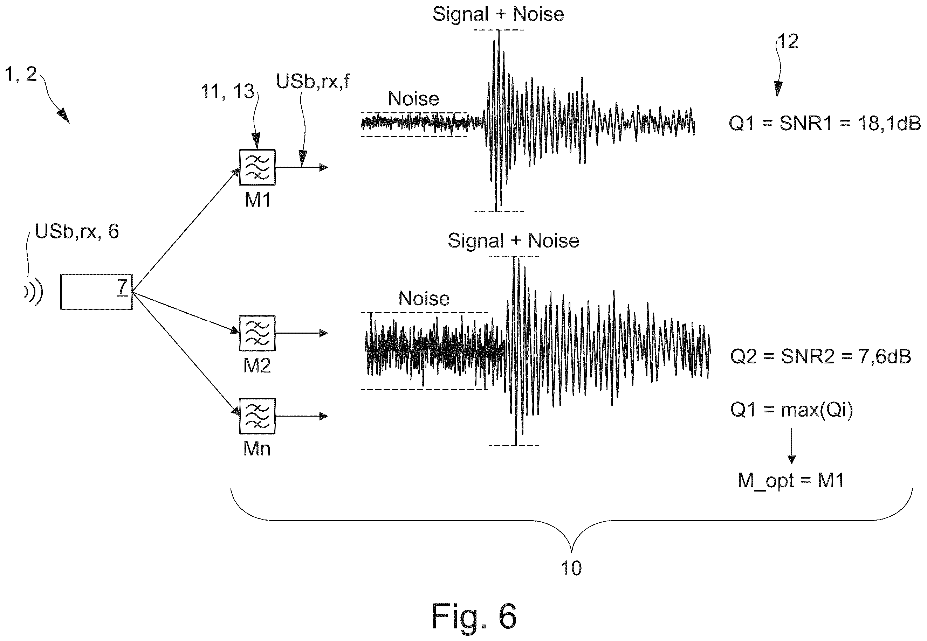

Schließlich wird in Fig. 6 die Berechnung eines weiteren Qualitätswertes Q gezeigt. Der Qualitätswert Q wird in Fig. 6 für einen Frequenzbereich M des empfangenen breitbandigen Ultraschallsignals USb,rx durch Berechnung eines Signal-/Rausch-Verhältnisses SNR des empfangenen breitbandigen und frequenzgefilterten Ultraschallsignals USb,rx,f im betrachteten Zeitintervall ermittelt wird, wobei ein größeres Signal-/Rauschverhältnis SNR einem höheren Qualitätswert Q entspricht.

Im dargestellten Ausführungsbeispiel wird das Verfahren 1 so ausgeführt, dass das Signal-/Rausch-Verhältnis SNR berechnet wird aus dem Spitze-Spitze-Wert des reinen Rauschsignals (Noise) und dem Spitze-Spitze-Wert des verrauschten Nutzsignals (Signal+Noise) im betrachteten Zeitintervall, und zwar gemäß folgender Gleichung:

$$\text{SNRi} = 20 * \log_{10}(\text{ampl(Signal+Noise)}/\text{ampl(Noise)}) \text{ (dB)}.$$

Bei den dargestellten Verhältnissen führt das im Messfrequenzbereich M1 zu dem Qualitätswert von Q1 = 18.1 dB und im Messfrequenzbereich 2 zu einem Qualitätswert von Q2 = 7.6 dB. Daraus folgt, dass der Messfrequenzbereich M1 der optimale Messfrequenzbereich M_opt ist.

Bei einer Weiterbildung des Verfahrens 1 und des korrespondierenden Ultraschalldurchflussmessgeräts 2 werden mehrere Arten der vorgestellten Qualitätswerte Q zur Ermittlung des optimalen Messfrequenzbereichs M_opt bestimmt und ausgewertet.

Vorzugsweise wird für jede Art von Qualitätswert Q (Laufzeit, Signalähnlichkeit, Frequenzabweichung, Signal-/Rausch-Verhältnis) ein unterer Akzeptanzschwellwert definiert, bei dessen Unterschreitung ein zugehöriger Messfrequenzbereich M als optimaler Messfrequenzbereich M_opt kategorisch ausfällt. Dadurch wird verhindert, dass zur Anwendung gebrachte Qualitätskriterien Q unter einen Minimalwert fallen können.

Wenn zwei Qualitätswerte Q einer Art von Qualitätswert innerhalb eines Tolleranzbereichs bei verschiedenen Messfrequenzbereichen M als gleichwertig aufgefasst werden, entscheidet eine weitere Art von Qualitätswert in den Messfrequenzbereichen M über den optimalen Messfrequenzbereich M_opt.

Vorzugsweise wird für jede Art von Qualitätswert Q (Laufzeit, Signalähnlichkeit, Frequenzabweichung, Signal-/Rausch-Verhältnis) ein oberer Akzeptanzschwellwert definiert, bei dessen Überschreitung ein zugehöriger Messfrequenzbereich M als optimaler Messfrequenzbereich kategorisch gewählt wird. Dadurch wird ermöglicht, dass zur Anwendung gebrachte Qualitätskriterien Q bei einer überragenden Bewertung andere Arten von Qualitätswerten Q ausstechen können.

**Bezugszeichen**

| | |
|---|---|
| 1 | Verfahren |
| 2 | Ultraschalldurchflussmessgerät |
| 3 | Medium |
| 4 | Messrohr |
| 5 | sendender Ultraschallwandler |
| 6 | Ultraschallsignal |
| 7 | empfangender Ultraschallwandler |
| 8 | Steuer- und Auswerteeinheit |
| 9 | Ultraschallmesspfad |
| 10 | Auswerteschritt |
| 11 | Frequenzfilterung |
| 12 | Berechnung des Qualitätswertes |
| 13 | Bandpassfilter |
| 14 | Messbetrieb |
| 15 | Rechtecksignalfolge |
| 16 | Hüllkurven |

| | |
|---|---|
| t_sig | Signallaufzeit |
| delta_t_sig | Laufzeitabweichung |
| t_sig,ref | Vergleichslaufzeit |
| USb,tx | ausgesendetes breitbandiges Ultraschallsignal |
| USb,rx | empfangenes breitbandiges Ultraschallsignal |
| USb,rx,f | empfangenes breitbandiges und frequenzgefiltertes Ultraschallsignal |
| USref | Referenzsignal |
| M | Messfrequenzbereich |
| M_opt | optimaler Messfrequenzbereich |
| Q | Qualitätswert |

**Patentansprüche**

1. Verfahren (1) zum Betreiben eines Ultraschalldurchflussmessgeräts (2) zur Messung des Durchflusses durch ein von einem Medium (3) durchströmtes Messrohr (4), wobei das Ultraschalldurchflussmessgerät (2) wenigstens einen sendenden Ultraschallwandler (5) zum Senden von Ultraschallsignalen (6) und wenigstens einen empfangenden Ultraschallwandler (7) zum Empfangen von Ultraschallsignalen (6) und eine Steuer- und Auswerteeinheit (8) umfasst, wobei die Ultraschallwandler (5, 7) so angeordnet sind, dass sie in dem Medium (3) einen Ultraschallmesspfad (9) realisieren und wobei die Steuer- und Auswerteeinheit (8) den sendenden Ultraschallwandler (5) so ansteuert, dass dieser das Ultraschallsignal (6) emittiert, der empfangende Ultraschallwandler (7) das emittierte Ultraschallsignal (6) empfängt und die Steuer- und Auswerteeinheit (8) im Messbetrieb (14) durch Auswertung emittierter und empfangener Ultraschallsignale (6) aus einer ermittelten Signallaufzeit (t_sig) des Ultraschallsignals (6) zumindest einen mittelbaren Wert für den Durchfluss (Vp) des Mediums (3) durch das Messrohr (4) ermittelt,
**dadurch gekennzeichnet,**

   **dass** die Steuer- und Auswerteeinheit (8) den sendenden Ultraschallwandler (5) so ansteuert, dass ein breitbandiges Ultraschallsignal (USb,tx) emittiert wird,
   **dass** in einem Auswerteschritt (10) ein optimaler Messfrequenzbereich (M_opt) ermittelt wird, indem das empfangene breitbandige Ultraschallsignal (USb,rx) frequenzgefiltert (11) wird in mehrere Messfrequenzbereiche (M) des empfangenen breitbandigen Ultraschallsignals (USb,rx), indem ferner für mehrere der Messfrequenzbereiche (M) jeweils wenigstens ein Qualitätswert (Q) aus dem frequenzgefilterten Ultraschallsignal (USb,rx,f) des zugehörigen Messfrequenzbereichs (M) berechnet (12) wird und derjenige Messfrequenzbereich (M) als optimaler Messfrequenzbereich (M_opt) bestimmt wird, der den höchsten Qualitätswert (Q) erzielt, und
   **dass** bei der Ermittlung des zumindest mittelbaren Wertes für den Durchfluss (Vp) eine Signallaufzeit (t_sig) verwendet wird, die nach Frequenzfilterung (11) des empfangenen breitbandigen Ultraschallsignals (USb,rx) aus dem optimalen Messfrequenzbereich (M_opt) ermittelt worden ist.

2. Verfahren (1) nach Anspruch 1, **dadurch gekennzeichnet, dass** der Auswerteschritt (10) zur Ermittlung eines optimalen Messfrequenzbereichs (M_opt) bei jeder Bestimmung des zumindest mittelbaren Wertes für den Durchfluss (Vp) des Mediums (3) ausgeführt wird, oder dass der Auswerteschritt (10) zur Ermittlung eines optimalen Messfrequenzbereichs (M_opt) nach einer Mehrzahl von Bestimmungen des zumindest mittelbaren Wertes für den Durchfluss (Vp) des Mediums (3) ausgeführt wird, oder dass der Auswerteschritt (10) zur Ermittlung eines optimalen Messfrequenzbereichs (M_opt) durch ein externes Signal des Ultraschalldurchflussmessgeräts (2) ausgelöst wird.

3. Verfahren (1) nach Anspruch 1 oder 2, **dadurch gekennzeichnet, dass** das breitbandige Ultraschallsignal (USb,tx) erzeugt wird durch Anregung des sendenden Ultraschallwandlers (5) mit einer Überlagerung mehrerer periodischer Zeitsignale unterschiedlicher Frequenz, insbesondere wobei die periodischen Zeitsignale harmonische Signale sind.

4. Verfahren (1) nach Anspruch 1 oder 2, **dadurch gekennzeichnet, dass** das breitbandige Ultraschallsignal (USb,tx) erzeugt wird durch Anregung des sendenden Ultraschallwandlers (5) mit einem Rechtecksignal oder mit einer periodischen Rechtecksignalfolge (15), insbesondere wobei die Grundfrequenz der periodischen Rechtecksignalfolge (15) einer Grundmode einer Schwingung des sendenden Ultraschallwandlers (5) entspricht.

5. Verfahren (1) nach einem der Ansprüche 1 bis 4, **dadurch gekennzeichnet, dass** das empfangene breitbandige Ultraschallsignal (USb,rx) frequenzgefiltert (11) wird in mehrere Messfrequenzbereiche (M) des empfangenen breitbandigen Ultraschallsignals (USb,rx) durch Einsatz wenigstens eines analogen oder digitalen Bandpassfilters (13), insbesondere wobei das digitale Bandpassfilter (13) implementiert wird als Finite Impulse Response (FIR) oder als Infinite Impulse Response (IIR) Filter.

6. Verfahren (1) nach einem der Ansprüche 1 bis 5, **dadurch gekennzeichnet, dass** der Qualitätswert (Q) für einen Messfrequenzbereich (M) ermittelt wird, indem eine Signallaufzeit (t_sig) des frequenzgefilterten Ultraschallsignals (USb,rx,f) ermittelt wird und eine Laufzeitabweichung (delta_t_sig) von einer Vergleichslaufzeit (t_sig,ref) ermittelt wird, wobei eine kleinere Laufzeitabweichung (delta_t_sig) einem höheren Qualitätswert (Q) entspricht.

7. Verfahren (1) nach Anspruch 6, **dadurch gekennzeichnet, dass** die Vergleichslaufzeit (t_sig,ref) eine Signallaufzeit aus einem vorbestimmten Messfrequenzbereich (M) ist oder die Vergleichslaufzeit (t_sig,ref) der Mittelwert von Signallaufzeiten (t_sig) aus vorbestimmten Messfrequenzbereichen (M) ist, insbesondere der Mittelwert von Signallaufzeiten (t_sig) aus allen Messfrequenzbereichen (M).

8. Verfahren (1) nach einem der Ansprüche 1 bis 7, **dadurch gekennzeichnet, dass** der Qualitätswert (Q) für einen Messfrequenzbereich (M) des empfangenen breitbandigen Ultraschallsignals (USb,rx) durch Berechnung einer Signalabweichung (delta_USb) im betrachteten Zeitintervall ermittelt wird zwischen dem empfangenen, frequenzgefilterten breitbandigen Ultraschallsignal (USb,rx,f) und einem entsprechenden Referenzsignal (USref), wobei eine kleinere Signalabweichung einem höheren Qualitätswert (Q) entspricht.

9. Verfahren (1) nach Anspruch 8, **dadurch gekennzeichnet, dass** die Signalabweichung (delta_USb) durch Vergleich korrespondierender Schwingungsamplituden berechnet wird.

10. Verfahren (1) nach einem der Ansprüche 1 bis 9, **dadurch gekennzeichnet, dass** der Qualitätswert (Q) für einen Messfrequenzbereich (M) des empfangenen breitbandigen Ultraschallsignals (USb,rx) durch Berechnung wenigstens einer Frequenzabweichung (delta_f) im betrachteten Zeitintervall ermittelt wird zwischen dem empfangenen, frequenzgefilterten breitbandigen Ultraschallsignal (USb,rx,f) und einem entsprechenden Referenzsignal (USref), wobei eine kleinere Frequenzabweichung (delta_f) einem höheren Qualitätswert entspricht.

11. Verfahren (1) nach Anspruch 10, **dadurch gekennzeichnet, dass** die momentanen Signalfrequenzen der miteinander verglichenen Signale im Zeitbereich berechnet werden durch Anwendung der Hilbert-Transformation auf die Signale, insbesondere wobei der Qualitätswert (Q) der Mittelwert mehrerer der berechneten Frequenzabweichungen (delta_f) im betrachteten Zeitintervall ist.

12. Verfahren (1) nach einem der Ansprüche 1 bis 11, **dadurch gekennzeichnet, dass** der Qualitätswert (Q) für einen Frequenzbereich (M) des empfangenen breitbandigen Ultraschallsignals (USb,rx) durch Berechnung wenigstens eines Signal-/Rausch-Verhältnisses (SNR) des empfangenen breitbandigen Ultraschallsignals (USb,rx) im betrachteten Zeitintervall ermittelt wird, wobei ein größeres Signal-/Rauschverhältnis (SNR) einem höheren Qualitätswert (Q) entspricht.

13. Verfahren (1) nach Anspruch 12, **dadurch gekennzeichnet, dass** das Signal-/Rausch-Verhältnis (SNR) berechnet wird aus dem Spitze-Spitze-Wert des reinen Rauschsignals (Noise) und dem Spitze-Spitze-Wert des verrauschten Nutzsignals (Signal+Noise).

14. Ultraschalldurchflussmessgeräts (2) mit einem Messrohr (4) zur Messung des Durchflusses durch das von einem Medium (3) durchströmten Messrohr (4), mit wenigstens einem sendenden Ultraschallwandler (5) zum Senden von Ultraschallsignalen (6) und wenigstens einem empfangenden Ultraschallwandler (7) zum Empfangen von Ultraschallsignalen (6) und mit einer Steuer- und Auswerteeinheit (8), wobei die Ultraschallwandler (5, 7) so angeordnet sind, dass sie in dem Medium (3) einen Ultraschallmesspfad (9) realisieren und wobei die Steuer- und Auswerteeinheit (8) den sendenden Ultraschallwandler (5) so ansteuert, dass dieser das Ultraschallsignal (6) emittiert, der empfangende Ultraschallwandler (7) das emittierte Ultraschallsignal (6) empfängt und die Steuer- und Auswerteeinheit (8) im Messbetrieb (14) durch Auswertung emittierter und empfangener Ultraschallsignale (6) aus einer ermittelten Signallaufzeit (t_sig) des Ultraschallsignals (6) zumindest einen mittelbaren Wert für den Durchfluss (Vp) des Mediums (3) durch das Messrohr (4) ermittelt,
**dadurch gekennzeichnet,**

**dass** die Steuer- und Auswerteeinheit (8) den sendenden Ultraschallwandler (5) so ansteuert, dass ein breitbandiges Ultraschallsignal (USb,tx) emittiert wird,
**dass** die Steuer- und Auswerteeinheit (8) in einem Auswerteschritt (10) einen optimalen Messfrequenzbereich (M_opt) ermittelt, indem das empfangene breitbandige Ultraschallsignal (USb,rx) frequenzgefiltert (11) wird in mehrere Messfrequenzbereiche (M) des empfangenen breitbandigen Ultraschallsignals (USb,rx), indem ferner für mehrere der Messfrequenzbereiche (M) jeweils wenigstens ein Qualitätswert (Q) aus dem frequenzgefilterten Ultraschallsignal (USb,rx,f) des zugehörigen Messfrequenzbereichs (M) berechnet (12) wird und derjenige Messfrequenzbereich (M) als optimaler Messfrequenzbereich (M_opt) bestimmt wird, der den höchsten Qualitätswert (Q) erzielt, und
**dass** bei der Ermittlung des zumindest mittelbaren Wertes für den Durchfluss (Vp) eine Signallaufzeit (t_sig) verwendet wird, die nach Frequenzfilterung (11) des empfangenen breitbandigen Ultraschallsignals (USb,rx) aus dem optimalen Messfrequenzbereich (M_opt) ermittelt worden ist.

15. Ultraschalldurchflussmessgerät (2) nach Anspruch 14, **dadurch gekennzeichnet, dass** die Steuer- und Auswerteeinheit (8) im Betrieb des Ultraschalldurchflussmessgeräts (2) das Verfahren (1) gemäß dem Kennzeichnungsteil wenigstens eines Anspruchs der Ansprüche 2 bis 13 ausführt.

Fig. 1

Fig. 2

t_sig,ref = mean(t_sig,i)

delta_t_sig,i = abs(t_sig,i - t_sig,ref)

Q1 (delta_t_sig, 1)

Q2 (delta_t_sig, 2)

Q3 (delta_t_sig, 3)

Q4 (delta_t_sig, 4)

Q3 = max(Qi)

M_opt = M3

USb,rx,f

t_sig, 1

t_sig, 2

t_sig, 3

t_sig, 4

M1

M2

M3

M4

USb,rx, 6

**Fig. 3**

Fig. 4

Fig. 5

Fig. 6

Europäisches
Patentamt

European
Patent Office

Office européen
des brevets

# EUROPÄISCHER RECHERCHENBERICHT

Nummer der Anmeldung

EP 25 21 2746

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 5 117 698 A (BAUMOEL JOSEPH [US]) 2. Juni 1992 (1992-06-02) * Spalte 4, Zeile 31 - Spalte 7, Zeile 25 * * Spalte 19, Zeile 63 - Spalte 25, Zeile 37; Abbildung 1 * ----- | 1-15 | INV. G01F1/66 G01F1/667 ADD. G01F25/10 |
| A | US 2020/209031 A1 (DABAK ANAND [US] ET AL) 2. Juli 2020 (2020-07-02) * Absätze [0011] - [0016]; Abbildung 1 * ----- | 1-15 | |
| A | EP 3 063 508 B1 (UNIV DENMARK TECH DTU [DK]) 4. April 2018 (2018-04-04) * Absätze [0018] - [0024], [0052]; Abbildung 1 * ----- | 1-15 | |
| A | KR 102 212 129 B1 (KYEONGBUK ENV DEVELOPMENT CO LTD [KR]; KOREA WATER RESOURCES CORP [KR]) 4. Februar 2021 (2021-02-04) * Absätze [0079] - [0089] * ----- | 1-15 | |
| A | DE 198 15 199 A1 (FRAUNHOFER GES FORSCHUNG [DE]) 14. Oktober 1999 (1999-10-14) * das ganze Dokument * ----- | 1-15 | RECHERCHIERTE SACHGEBIETE (IPC) G01F |
| A | US 2022/120596 A1 (SATHYANARAYANA AMARDEEP [US] ET AL) 21. April 2022 (2022-04-21) * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 20. März 2026 | Myrillas, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 21 2746

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2026

| Im Recherchenbericht angeführtes Patentdokument | Datum der Veröffentlichung | Mitglied(er) der Patentfamilie | Datum der Veröffentlichung |
|---|---|---|---|
| US 5117698 A | 02-06-1992 | KEINE | |
| US 2020209031 A1 | 02-07-2020 | CN 112997051 A | 18-06-2021 |
| | | EP 3903073 A1 | 03-11-2021 |
| | | JP 2022516484 A | 28-02-2022 |
| | | US 2020209031 A1 | 02-07-2020 |
| | | WO 2020139612 A1 | 02-07-2020 |
| EP 3063508 B1 | 04-04-2018 | EP 3063508 A1 | 07-09-2016 |
| | | WO 2015063079 A1 | 07-05-2015 |
| KR 102212129 B1 | 04-02-2021 | KEINE | |
| DE 19815199 A1 | 14-10-1999 | DE 19815199 A1 | 14-10-1999 |
| | | WO 9951944 A1 | 14-10-1999 |
| US 2022120596 A1 | 21-04-2022 | CN 107014447 A | 04-08-2017 |
| | | US 2017115388 A1 | 27-04-2017 |
| | | US 2022120596 A1 | 21-04-2022 |

EPO FORM P0461

Für nähere Einzelheiten zu diesem Anhang : siehe Amtsblatt des Europäischen Patentamts, Nr.12/82